# EUROPEAN PATENT APPLICATION

(11) **EP 4 672 409 A1**
(43) Date of publication of application: **31.12.2025**
(21) Application number: 24868683.4
(22) Date of filing: 19.09.2024
(51) Int. Cl.: H01M 10/0565, H01M 10/0568, H01M 10/0569, H01M 10/0567, H01M 10/052

(54) **COMPOSITION FOR FORMING GEL POLYMER ELECTROLYTE, GEL POLYMER ELECTROLYTE, AND LITHIUM SECONDARY BATTERY COMPRISING GEL POLYMER ELECTROLYTE**

(30) Priority: 19.09.2023 KR 20230124966
(71) Applicant: LG Energy Solution, Ltd., Seoul 07335 (KR); IUCF-HYU (Industry-University Cooperation Foundation Hanyang University), Seoul 04763 (KR)
(72) Inventor: AHN, Kyoung Ho, Daejeon 34122 (KR); KIM, Dong Won, Seoul 06219 (KR); OH, Young Ho, Daejeon 34122 (KR); LEE, Chul Haeng, Daejeon 34122 (KR); LIM, Da Ae, Seoul 04760 (KR); SHIN, Young Kyeong, Seoul 04129 (KR); SEOK, Jin Hong, Bucheon-si Gyeonggi-do 14514 (KR); HONG, Da Young, Seoul 02723 (KR)
(74) Representative: Hoffmann Eitle
(86) International application number: PCT/KR2024/014124
(87) International publication number: WO 2025/063706

(57) **Abstract**

The present invention provides a composition for forming a gel polymer electrolyte which includes a lithium salt; an organic solvent; and a crosslinking compound represented by Formula 1. 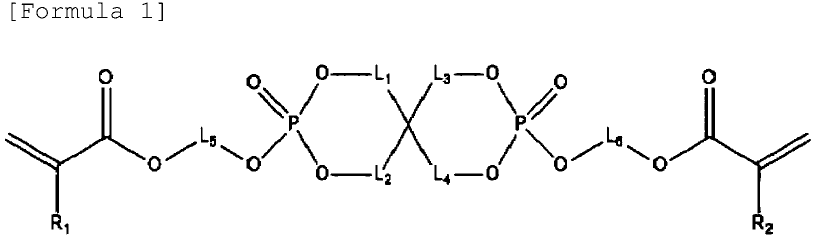 wherein in Formula 1, L₁, L₂, L₃, and L₄ are each independently selected from a direct bond or an alkylene group having 1 to 3 carbon atoms, L₅ and L₆ are each independently an alkylene group having 1 to 20 carbon atoms in which at least one methylene group is optionally substituted with an ether group and at least one hydrogen is substituted with fluorine, and R₁ and R₂ are each independently selected from hydrogen, an alkyl group having 1 to 3 carbon atoms, or a halogen.

## Description

### TECHNICAL FIELD

### Cross-reference to Related Applications

This application claims priority from Korean Patent Application No. 10-2023-0124966, filed on September 19, 2023, the disclosure of which is incorporated by reference herein.

### Technical Field

The present invention relates to a composition for forming a gel polymer electrolyte, a gel polymer electrolyte and a lithium secondary battery including the gel polymer electrolyte.

### BACKGROUND ART

Demand for lithium secondary batteries having high energy density is rapidly increasing due to technological advancements in mobile electronic devices, electric vehicles (EVs), and grid-scale energy storage systems (ESS).

In general, a lithium secondary battery may be composed of materials such as a positive electrode that is composed of a transition metal oxide containing lithium, a negative electrode capable of storing lithium, an electrolyte that becomes a medium for transferring lithium ions, and a separator.

A liquid electrolyte with high ionic conductivity and excellent electrochemical properties is being used as the electrolyte of the lithium secondary battery. However, a side reaction may occur because the liquid electrolyte is highly flammable and has high reactivity with an electrode material, and fire and explosion may occur under abnormal operating conditions because the liquid electrolyte has low stability, for example, leakage occurs.

Thus, recently, in order to improve stability of a lithium ion battery, research has been conducted to develop a more stable electrolyte instead of the liquid electrolyte, and, for example, an ionic liquid electrolyte, a solid electrolyte, and a gel polymer electrolyte have been proposed.

The ionic liquid electrolyte has excellent thermal stability and oxidation stability, but is disadvantageous in that it is unstable on a surface of the negative electrode, wettability for a polyolefin-based separator is low due to high viscosity, and cost is high. The solid electrolyte improves the stability of the battery by excluding a flammable organic solvent, but has problems in that ionic conductivity is reduced around the electrolyte and lifetime is degraded due to an increase in interfacial resistance between the solid electrolyte and the electrode.

The gel polymer electrolyte is an electrolyte system in which a liquid electrolyte is encapsulated and impregnated in a polymer structure, and it is advantageous in that it has high structural, thermal, and mechanical stability over time and may secure relatively high ionic conductivity, and manufacturing costs are reasonable.

In this case, the gel polymer electrolyte may be classified into a physically cross-linked gel polymer electrolyte that forms a polymer structure by physical bonding of polymers, and a chemically cross-linked gel polymer electrolyte that forms a polymer structure through a chemical reaction of a reactive oligomer or a crosslinking agent. Since a binding force of the physically cross-linked gel polymer electrolyte may be weakened over time, the chemically cross-linked gel polymer electrolyte, which forms a polymer structure through chemical bonding, has higher structural, thermal, and mechanical stability.

However, since the chemically cross-linked gel polymer electrolyte contains a large amount of the liquid electrolyte inside, it still has problems such as leakage, ignition, and explosion.

Therefore, there is an urgent need to develop a gel polymer electrolyte which may improve overall performances, such as stability and life performance, of the lithium secondary battery.

### DISCLOSURE OF THE INVENTION

### TECHNICAL PROBLEM

An aspect of the present invention provides a composition for forming a gel polymer electrolyte which may simultaneously improve safety and life performance of a lithium secondary battery by having excellent oxidation stability and flame retardancy and having an effect of suppressing a calorific value of an electrode.

Also, another aspect of the present invention provides a gel polymer electrolyte which may simultaneously improve the safety and the life performance of the lithium secondary battery by having excellent oxidation stability and flame retardancy and having the effect of suppressing the calorific value of the electrode.

Furthermore, another aspect of the present invention provides a lithium secondary battery including the above-described gel polymer electrolyte.

### TECHNICAL SOLUTION

[1] The present invention provides a composition for forming a gel polymer electrolyte which includes a lithium salt; an organic solvent; and a crosslinking compound represented by Formula 1. 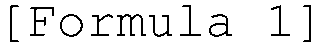 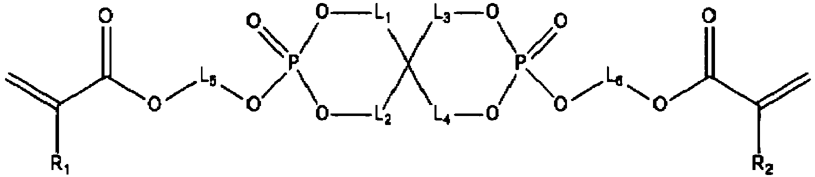 In Formula 1, L₁, L₂, L₃, and L₄ are each independently selected from a direct bond or an alkylene group having 1 to 3 carbon atoms, L₅ and L₆ are each independently an alkylene group having 1 to 20 carbon atoms in which at least one methylene group is optionally substituted with an ether group and at least one hydrogen is substituted with fluorine, and R₁ and R₂ are each independently selected from hydrogen, an alkyl group having 1 to 3 carbon atoms, or a halogen.
[2] The present invention provides the composition for forming a gel polymer electrolyte of [1] above, wherein the composition for forming a gel polymer electrolyte further includes a polymerization initiator.
[3] The present invention provides the composition for forming a gel polymer electrolyte of at least one of [1] and [2] above, wherein a molecular weight of the crosslinking compound is in a range of 700 g/mol to 2,000 g/mol.
[4] The present invention provides the composition for forming a gel polymer electrolyte of at least one of [1] to [3] above, wherein the crosslinking compound is included in an amount of 1 wt% to 30 wt% based on a total weight of the composition for forming a gel polymer electrolyte.
[5] The present invention provides the composition for forming a gel polymer electrolyte of at least one of [1] to [4] above, wherein, in Formula 1, L₁, L₂, L₃, and L₄ are each independently selected from a direct bond or a methylene group.
[6] The present invention provides the composition for forming a gel polymer electrolyte of at least one of [1] to [5] above, wherein, in Formula 1, L₁, L₂, L₃, and L₄ each are a methylene group.
[7] The present invention provides the composition for forming a gel polymer electrolyte of at least one of [1] to [6] above, wherein L₅ and L₆ are each independently represented by Formula 2.

   [Formula 2] *-[(CH₂)ₙ=(CF₂)ₘ-(CH₂)ₚ-(O)_{q}-(CH₂)ᵣ-(CF₂)ₛ-(CH₂)ₜ]ᵤ-*

   In Formula 2, n, m, p, r, s, and t each are an integer of 0 or more, q is 0 or 1, m+s is an integer of 1 or more, u is an integer of 1 or more, and a product of (n+m+p+q+s+t) and u is an integer of 1 to 20, but, when q is 1, n+m+p is an integer of 1 or more and r+s+t is an integer of 1 or more.
[8] The present invention provides the composition for forming a gel polymer electrolyte of at least one of [1] to [7] above, wherein the crosslinking compound represented by Formula 1 includes a crosslinking compound represented by Formula 1-1. 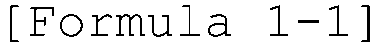 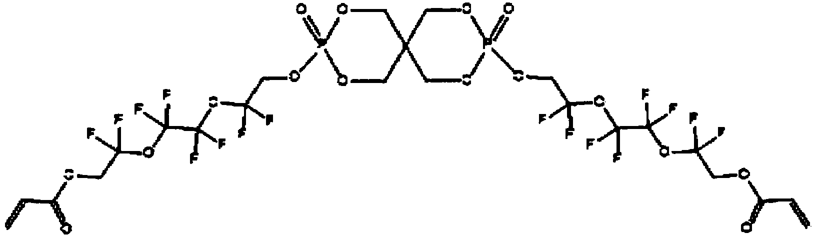
[9] The present invention provides the composition for forming a gel polymer electrolyte of at least one of [1] to [8] above, wherein the lithium salt includes at least one selected from the group consisting of LiCl, LiBr, LiI, LiBF₄, LiClO₄, LiAlO₄, LiAlCl₄, LiPF₆, LiSbF₆, LiAsF₆, LiB₁₀Cl₁₀, LiBOB (LiB(C₂O₄)₂), LiCF₃SO₃, LiFSI (LiN(SO₂F)₂), LiCH₃SO₃, LiCF₃CO₂, LiCH₃CO₂, and LiBETI (LiN(SO₂CF₂CF₃)₂).
[10] The present invention provides the composition for forming a gel polymer electrolyte of at least one of [1] to [9] above, wherein the organic solvent includes at least one selected from the group consisting of a carbonate-based solvent, an ester-based solvent, an ether-based solvent, a ketone-based solvent, an aromatic hydrocarbon-based solvent, a phosphate-based solvent, a sulfone-based solvent, a nitrile-based solvent, and an ionic liquid.
[11] The present invention provides the composition for forming a gel polymer electrolyte of at least one of [1] to [10] above, wherein the composition for forming a gel polymer electrolyte further includes an additive, wherein the additive includes at least one selected from the group consisting of a sultone-based compound, a halogen-substituted carbonate-based compound, a nitrile-based compound, a cyclic carbonate-based compound, a sulfite-based compound, a sulfone-based compound, a sulfate-based compound, a phosphate-based or phosphite-based compound, a borate-based compound, and a lithium salt-based compound.
[12] The present invention provides the composition for forming a gel polymer electrolyte of at least one of [1] to [11] above, wherein the additive includes the halogen-substituted carbonate-based compound, wherein the halogen-substituted carbonate-based compound is fluoroethylene carbonate.
[13] The present invention provides a gel polymer electrolyte including a lithium salt; an organic solvent; and a polymer matrix formed by a crosslinking reaction of a crosslinking compound represented by Formula 1. 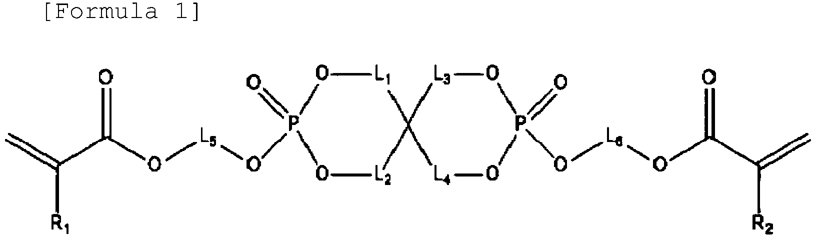 In Formula 1, L₁, L₂, L₃, and L₄ are each independently selected from a direct bond or an alkylene group having 1 to 3 carbon atoms, L₅ and L₆ are each independently an alkylene group having 1 to 10 carbon atoms in which at least one methylene group is optionally substituted with an ether group and at least one hydrogen is substituted with fluorine, and R₁ and R₂ are each independently selected from hydrogen, an alkyl group having 1 to 3 carbon atoms, or a halogen.
[14] The present invention provides a lithium secondary battery including a positive electrode; a negative electrode facing the positive electrode; a separator disposed between the positive electrode and the negative electrode; and the gel polymer electrolyte of [13] above.

### ADVANTAGEOUS EFFECTS

Since a composition for forming a gel polymer electrolyte according to the present invention is characterized by including a crosslinking compound of a specific formula, wherein the crosslinking compound includes a fluorine group and a spirocyclic diphosphate group in the compound, a gel polymer electrolyte formed by a crosslinking reaction of the crosslinking compound may have excellent oxidation stability and flame retardancy and has an excellent effect of suppressing a calorific value of an electrode. Thus, a lithium secondary battery including the composition for forming a gel polymer electrolyte or the gel polymer electrolyte may not only prevent leakage of an organic solvent and a short-circuit phenomenon of the battery, but may also have excellent safety and life performance.

### BRIEF DESCRIPTION OF THE DRAWINGS

FIG. 1 is a schematic view illustrating a synthesis process of a crosslinking compound according to Preparation Example 1.
FIG. 2 is results of Fourier-transform infrared (FT-IR) spectra of fluorinated ether monoacrylate (PFE-mono AC) and spirocyclic pentaerythritol diphosphate perfluorinated ether acrylate (SPDFA) which are prepared by Steps 2 and 3 of Preparation Example 1.
FIG. 3 is results of a ¹H nuclear magnetic resonance (NMR) spectrum of spirocyclic pentaerythritol bisphosphorate diphosphoryl chloride (SPDPC) prepared by Step 1 of Preparation Example 1.
FIG. 4 is results of a ¹H NMR spectrum of spirocyclic pentaerythritol diphosphate perfluorinated ether acrylate (SPDFA) prepared by Step 3 of Preparation Example 1.
FIG. 5 is results of FT-IR spectrum analysis of Examples 1 and 2.
FIG. 6 is results of measuring ionic conductivity according to temperature of a gel polymer electrolyte of Example 2 and a liquid electrolyte of Comparative Example 1.
FIG. 7 is a graph in which current values according to an applied voltage (3.0 V to 6.0 V) of a liquid electrolyte of Comparative Example 1 and gel polymer electrolytes of Comparative Examples 4, 6, and 8 are measured by linear sweep voltammetry (LSV).
FIG. 8 is charge and discharge curves in 1^{st}, 10^{th}, 30^{th}, 50^{th}, 100^{th}, 200^{th}, and 300^{th} cycles of a lithium secondary battery of Example 3.
FIG. 9 is a graph illustrating a change in discharge capacity according to the cycle of the lithium secondary battery of Example 3.
FIG. 10 is a photograph showing results before combustion test (left) and after combustion test (right) of the liquid electrolyte of Comparative Example 1.
FIG. 11 is a photograph showing results before combustion test (left) and after combustion test (right) of the gel polymer electrolyte of Example 2.
FIG. 12 is a photograph showing results before storage (left) and after storage (right) when a polyethylene separator, which is not impregnated with a gel polymer electrolyte according to the present invention, is stored at 140°C.
FIG. 13 is a photograph showing results before storage (left) and after storage (right) when a polyethylene separator, which is impregnated with the gel polymer electrolyte according to the present invention, is stored at 140°C.
FIG. 14 is a graph in which a battery voltage over time is measured when lithium secondary batteries of Example 3 and Comparative Example 2 are stored in a hot box at 140°C.
FIG. 15 is a graph in which a calorific value according to temperature of a negative electrode is measured for the lithium secondary batteries of Example 3 and Comparative Example 2.
FIG. 16 is a graph in which a calorific value according to temperature of a positive electrode is measured for the lithium secondary batteries of Example 3 and Comparative Example 2.

### MODE FOR CARRYING OUT THE INVENTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

It will be further understood that the terms "include," "comprise," or "have" in this specification specify the presence of stated features, numbers, steps, elements, or combinations thereof, but do not preclude the presence or addition of one or more other features, numbers, steps, elements, or combinations thereof.

Before describing the present invention, unless otherwise specified in the present invention, the expression "*" denotes the same or different atom or a portion connected between ends of a formula (binding site).

Also, the expressions "a" and "b" in the description of "a to b carbon atoms" in the present specification each denote the number of carbon atoms included in a specific functional group. That is, the functional group may include "a" to "b" carbon atoms. For example, the expression "alkyl group having 1 to 5 carbon atoms" denotes an alkyl group including 1 to 5 carbon atoms, that is, CH₃-, CH₃CH₂-, CH₃CH₂CH₂-, (CH₃)₂CH-, CH₃CH₂CH₂CH₂-, (CH₃)₂CHCH₂-, CH₃CH₂CH₂CH₂CH₂-, or (CH₃)₂CHCH₂CH₂-.

Furthermore, an alkyl group in the present specification may all be substituted or unsubstituted. Unless otherwise defined, the expression "substitution" denotes that at least one hydrogen bonded to carbon is substituted with an element other than hydrogen, for example, an alkyl group having 1 to 20 carbon atoms, an alkenyl group having 2 to 20 carbon atoms, an alkynyl group having 2 to 20 carbon atoms, an alkoxy group having 1 to 20 carbon atoms, a cycloalkyl group having 3 to 12 carbon atoms, a cycloalkenyl group having 3 to 12 carbon atoms, a cycloalkynyl group having 3 to 12 carbon atoms, a heterocycloalkyl group having 3 to 12 carbon atoms, a heterocycloalkenyl group having 3 to 12 carbon atoms, a heterocycloalkynyl group having 2 to 12 carbon atoms, an aryloxy group having 6 to 12 carbon atoms, a halogen atom, a fluoroalkyl group having 1 to 20 carbon atoms, a nitro group, an aryl group having 6 to 20 carbon atoms, a heteroaryl group having 2 to 20 carbon atoms, or a haloaryl group having 6 to 20 carbon atoms.

Hereinafter, the present invention will be described in more detail.

### Composition for Forming Gel Polymer Electrolyte

The present invention provides a composition for forming a gel polymer electrolyte.

Specifically, the composition for forming a gel polymer electrolyte is characterized by including a lithium salt; an organic solvent; and a crosslinking compound represented by Formula 1 below.

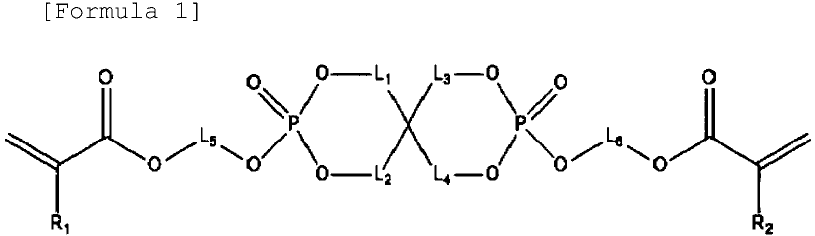

In Formula 1, L₁, L₂, L₃, and L₄ are each independently selected from a direct bond or an alkylene group having 1 to 3 carbon atoms, L₅ and L₆ are each independently an alkylene group having 1 to 20 carbon atoms in which at least one methylene group may be substituted with an ether group and at least one hydrogen is substituted with fluorine, and R₁ and R₂ are each independently selected from hydrogen, an alkyl group having 1 to 3 carbon atoms, or a halogen.

### 1) Lithium Salt

Various lithium salts commonly used in an electrolyte for a lithium secondary battery may be used as the lithium salt used in the present invention without limitation. For example, the lithium salt may include Li⁺ as a cation, and may include at least one selected from the group consisting of F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, B₁₀Cl₁₀⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (FSO₂)₂N⁻, CF₃CF₂(CF₃)₂CO⁻, (CF₃SO₂)₂CH⁻, CH₃SO₃⁻, CF₃(CF₂)₇SO₃⁻, CF₃CO₂⁻, CH₃CO₂⁻, SCN⁻, and (CF₃CF₂SO₂)₂N⁻ as an anion.

Specifically, the lithium salt may include at least one selected from the group consisting of LiCl, LiBr, LiI, LiBF₄, LiClO₄, LiAlO₄, LiAlCl₄, LiPF₆, LiSbF₆, LiAsF₆, LiB₁₀Cl₁₀, LiBOB (LiB(C₂O₄)₂), LiCF₃SO₃, LiFSI (LiN(SO₂F)₂), LiCH₃SO₃, LiCF₃CO₂, LiCH₃CO₂, and LiBETI (LiN(SO₂CF₂CF₃)₂). Specifically, the lithium salt may include at least one selected from the group consisting of LiBF₄, LiClO₄, LiPF₆, LiBOB (LiB(C₂O₄)₂), LiCF₃SO₃, LiTFSI (LiN(SO₂CF₃)₂), LiFSI ((LiN(SO₂F)₂), and LiBETI (LiN(SO₂CF₂CF₃)₂).

The lithium salt may be included in a concentration of 0.5 M to 5 M, particularly 0.8 M to 4 M, and more particularly 0.8 M to 2.0 M in the non-aqueous electrolyte. When the concentration of the lithium salt satisfies the above range, the output characteristics of the battery may be improved by improving a lithium ion yield (Li⁺ transference number) and a degree of dissociation of the lithium ions.

### 2) Organic Solvent

As the organic solvent, any non-aqueous solvent commonly used in a lithium secondary battery is not particularly limited as long as decomposition due to an oxidation reaction during charge and discharge of the lithium secondary battery may be minimized.

The organic solvent may include at least one selected from the group consisting of a carbonate-based solvent, an ester-based solvent, an ether-based solvent, a ketone-based solvent, an aromatic hydrocarbon-based solvent, a phosphate-based solvent, a sulfone-based solvent, a nitrile-based solvent, and an ionic liquid. The organic solvent may specifically include at least one selected from the group consisting of a carbonate-based solvent and an ester-based solvent, and more specifically, a carbonate-based solvent.

In a case in which the organic solvent includes the carbonate-based solvent, the carbonate solvent may include a cyclic carbonate-based solvent, a linear carbonate-based solvent, or a mixture thereof.

The cyclic carbonate-based solvent is an organic solvent which may well dissociate the lithium salt in the electrolyte due to high permittivity as a highly viscous organic solvent, wherein the cyclic carbonate-based organic solvent may specifically include at least one selected from the group consisting of ethylene carbonate (EC), propylene carbonate (PC), 1,2-butylene carbonate, 2,3-butylene carbonate, 1,2-pentylene carbonate, 2,3-pentylene carbonate, and vinylene carbonate, and may more specifically include ethylene carbonate.

Also, the linear carbonate-based solvent is an organic solvent having low viscosity and low permittivity, wherein the linear carbonate-based organic solvent may specifically include at least one selected from the group consisting of dimethyl carbonate (DMC), diethyl carbonate (DEC), dipropyl carbonate, ethyl methyl carbonate (EMC), methylpropyl carbonate, and ethylpropyl carbonate, and may more specifically include ethyl methyl carbonate (EMC).

The organic solvent may be a mixture of the cyclic carbonate-based solvent and the linear carbonate-based solvent. In this case, the cyclic carbonate-based solvent and the linear carbonate-based solvent may be mixed in a volume ratio of 10:90 to 40:60, and specifically, a volume ratio of 15:85 to 35:65. In a case in which the mixing ratio of the cyclic carbonate-based solvent to the linear carbonate-based solvent satisfies the above range, high permittivity and low viscosity characteristics may be simultaneously satisfied, and excellent ionic conductivity characteristics may be achieved.

A linear ester-based solvent and a cyclic ester-based solvent may be used as the ester-based solvent. The linear ester-based solvent may specifically include at least one selected from the group consisting of methyl acetate, ethyl acetate, propyl acetate, methyl propionate, ethyl propionate, propyl propionate, and butyl propionate. Also, the cyclic ester-based solvent may specifically include at least one selected from the group consisting of γ-butyrolactone, γ-valerolactone, γ-caprolactone, σ-valerolactone, and ε-caprolactone.

As the ether-based solvent, any one selected from the group consisting of dimethyl ether, diethyl ether, dipropyl ether, methylethyl ether, methylpropyl ether, ehtylpropyl ether, 1,3-dioxolane (DOL), and 2,2-bis(trifluoromethyl)-1,3-dioxolane (TFDOL) or a mixture of two or more thereof may be used, but the ether-based solvent is not limited thereto.

The nitrile-based solvent may be at least one selected from the group consisting of acetonitrile, propionitrile, butyronitrile, valeronitrile, caprylontrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile, but is not limited thereto.

The ionic liquid may include at least one selected from the group consisting of diethylmethylammonium trifluoromethanesulfonate, dimethylpropylammonium trifluoromethanesulfonate, N,N-diethyl-N-methyl-N-(2-methoxyethyl)ammonium bis(trifluoromethanesulfonyl)imide, N-methyl-N-propylpiperidium bis(trifluoromethanesulfonyl)imide, N-butyl-N-methylpyrrolidium bis(trifluoromethanesulfonyl)imide, and methylpropylpiperidiumtrifluoro methanesulfonyl imide.

Cyclohexanone may be used as the ketone-based solvent.

Specific examples of the aromatic hydrocarbon-based solvent may be selected from the group consisting of benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The sulfone-based solvent may be at least one selected from the group consisting of dimethyl sulfone, diethyl sulfone, ethyl methyl sulfone, dipropyl sulfone, dibutyl sulfone, diphenyl sulfone, and dimethyl sulfoxide.

The phosphate-based solvent may be at least one selected from the group consisting of trimethyl phosphate, triethyl phosphate, tris(2-chloroethyl) phosphate, tris(2,2,2-trifluoroethyl) phosphate, tripropyl phosphate, triisopropyl phosphate, tributyl phosphate, trihexyl phosphate, triphenyl phosphate, tritolyl phosphate, methyl ethylene phosphate, and ethyl ethylene phosphate.

### 3) Crosslinking Compound Represented by Formula 1

The crosslinking compound is characterized by being represented by Formula 1 below.

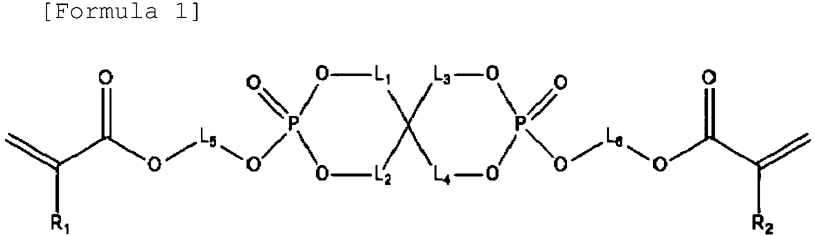

In Formula 1, L₁, L₂, L₃, and L₄ are each independently selected from a direct bond or an alkylene group having 1 to 3 carbon atoms, L₅ and L₆ are each independently an alkylene group having 1 to 20 carbon atoms in which at least one methylene group may be substituted with an ether group and at least one hydrogen is substituted with fluorine, and R₁ and R₂ are each independently selected from hydrogen, an alkyl group having 1 to 3 carbon atoms, or a halogen.

The crosslinking compound included in the composition for forming a gel polymer electrolyte is characterized in that acrylate groups are bonded to both ends of a spirocyclic diphosphate matrix and fluorine-substituted linker groups (L₅ and L₆) are present between the spirocyclic diphosphate matrix and the acrylate groups, and, since a polymer matrix formed by a crosslinking reaction of the crosslinking compound may have excellent oxidation stability and flame retardancy, thermal safety and prevention of ignition or explosion of a lithium secondary battery, in which the gel polymer electrolyte is used, may be ensured and excellent life performance may be achieved.

Specifically, the spirocyclic diphosphate matrix may form a radical while being vaporized during heating, and, since the radical formed in this case may scavenge an OH radical and an H radical which cause ignition of the battery, it is effective in preventing the ignition and improving the flame retardancy. However, the spirocyclic diphosphate has problems in that it has poor oxidation stability, is unstable particularly at a high voltage, and is easily ring-opened. The problem of the reduced oxidation stability of the spirocyclic diphosphate, along with a problem of not being able to achieve the above-described flame retardant effect, causes a degradation of the life performance of the lithium secondary battery.

To solve these problems, the crosslinking compound of the present invention is characterized in that the fluorine-substituted linker groups (L₅ and L₆) are present between the spirocyclic diphosphate matrix and the acrylate groups. Since decomposition and ring-opening of the spirocyclic diphosphate may be prevented to an excellent level by an increase in electronegativity according to the fluorine-substituted linker groups, the polymer matrix formed by the crosslinking compound or the crosslinking reaction thereof may exhibit excellent oxidation stability and flame retardant characteristics, and accordingly, a lithium secondary battery including the composition for forming a gel polymer electrolyte or a gel polymer electrolyte prepared therefrom may simultaneously exhibit excellent safety and life performance.

In Formula 1, L₁, L₂, L₃, and L₄ are each independently selected from a direct bond or an alkylene group having 1 to 3 carbon atoms, specifically may each independently be a direct bond or a methylene group (-CH₂-), and may more specifically be a methylene group in terms of improving structural stability of the spirocyclic diphosphate.

In Formula 1, L₅ and L₆ are alkylene groups having 1 to 20 carbon atoms in which at least one hydrogen is substituted with fluorine. L₅ and L₆ may function as a linker group that binds the spirocyclic diphosphate and acrylate in Formula 1. Also, since L₅ and L₆ have excellent electronegativity as alkylene groups having 1 to 20 carbon atoms in which at least one hydrogen is substituted with fluorine, the ring-opening or decomposition of the adjacent spirocyclic diphosphate may be prevented and the oxidation stability may be improved.

L₅ and L₆ may each independently be an alkylene group having 1 to 20 carbon atoms in which at least one hydrogen is substituted with fluorine, particularly an alkylene group having 1 to 10 carbon atoms in which at least one hydrogen is substituted with fluorine, and more particularly an alkylene group having 5 to 10 carbon atoms in which at least one hydrogen is substituted with fluorine. When L₅ and L₆ are within the above range, an effect of preventing the ring-opening or decomposition of the above-described spirocyclic diphosphate may be further improved while structural stability of the crosslinking compound is improved.

Also, L₅ and L₆ each independently have at least one methylene group (or difluoromethylene group) which may be substituted with an ether group (-O-). Specifically, L₅ and L₆ each independently have at least one methylene group which may be unsubstituted or substituted with an ether group.

L₅ and L₆ may each independently be an alkylene group having 1 to 20 carbon atoms, in which at least one hydrogen is substituted with fluorine, without particular limitation. For example, L₅ and L₆ may each independently be represented by Formula 2 below.

[Formula 2] *-[(CH₂)ₙ-(CF₂)ₘ-(CH₂)ₚ-(O)_{q}-(CH₂)ᵣ-(CF₂)ₛ-(CH₂)ₜ]ᵤ-*

In Formula 2, n, m, p, r, s, and t each are an integer of 0 or more, q is 0 or 1, m+s is an integer of 1 or more, u is an integer of 1 or more, and a product of (n+m+p+q+s+t) and u is an integer of 1 to 20, but, when q is 1, n+m+p is an integer of 1 or more, and r+s+t is an integer of 1 or more.

In Formula 2, in a case in which u is 2 or more, n, m, p, r, s, and t of each unit may be the same or different from each other.

In Formula 2, the product of (n+m+p+q+s+t) and u may be an integer of 1 to 20, particularly an integer of 1 to 10, and more particularly an integer of 5 to 10.

Specifically, the crosslinking compound represented by Formula 1 may include a crosslinking compound represented by Formula 1-1 below.

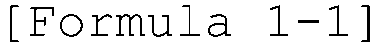

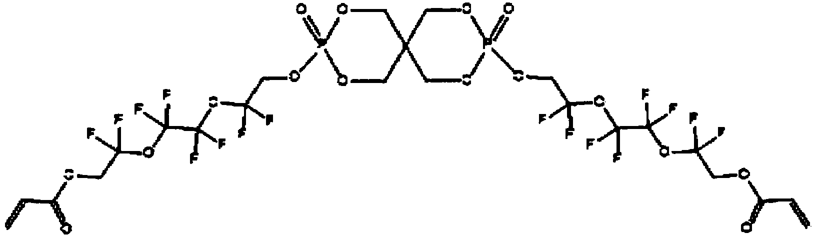

A molecular weight of the crosslinking compound may be in a range of 700 g/mol to 2,000 g/mol, and specifically, 850 g/mol to 1,200 g/mol.

The molecular weight may be measured by using a terminal group quantification method that quantitatively analyzes a functional group at an end of a molecular chain to obtain the molecular weight, a colligative property method (membrane osmosis, vapor pressure osmosis, etc.) using physical properties, such as osmotic pressure, vapor pressure reduction, boiling point elevation, and freezing point depression, a light scattering method using light scattering, an ultracentrifugation method that measures the molecular weight by analyzing sedimentation velocity or concentration distribution after centrifuging a polymer solution, a viscosity method using viscosity of the polymer solution, and gel permeation chromatography (GPC) using high-performance liquid chromatography (HPLC).

The crosslinking compound may be included in an amount of 1 wt% to 30 wt% based on a total weight of the composition for forming a gel polymer electrolyte. Specifically, the amount of the crosslinking compound may be 1 wt% or more, 2 wt% or more, 3 wt% or more, 4 wt% or more, 5 wt% or more, 6 wt% or more, 7 wt% or more, or 8 wt% or more based on the total weight of the composition for forming a gel polymer electrolyte. The amount of the crosslinking compound may be 30 wt% or less, 25 wt% or less, 20 wt% or less, 15 wt% or less, 12 wt% or less, or 11 wt% or less based on the total weight of the composition for forming a gel polymer electrolyte. More specifically, the amount of the crosslinking compound may be in a range of 3 wt% to 30 wt%, 5 wt% to 30 wt%, 5 wt% to 25 wt%, or 8 wt% to 15 wt% based on the total weight of the composition for forming a gel polymer electrolyte. When the amount of the crosslinking compound is within the above range, it is desirable that an increase in resistance and a decrease in ionic conductivity due to excessive addition of the crosslinking compound may be prevented while oxidation stability and flame retardancy of the above-described composition for forming a gel polymer electrolyte or gel polymer electrolyte are exhibited at an excellent level.

### 4) Polymerization Initiator

The composition for forming a gel polymer electrolyte may further include a polymerization initiator.

A general thermal polymerization initiator known in the art may be used as the polymerization initiator. Specifically, the polymerization initiator may include at least one selected from the group consisting of diisobutyl peroxide, t-amylperoxydicarbonate, di(4-tert-butylcyclohexyl)peroxydicarbonate, diethylhexyl peroxydicarbonate, dibutyl peroxydicarbonate, diisopropyl peroxydicarbonate, dicetyl peroxydicarbonate, dimyristyl peroxydicarbonate, tert-butyl peroxypivalate, dilauroyl peroxide, didecanoyl peroxide, 2,5-dimethyl-2,5-di(2-ethylhexanoylperoxy)hexane, 1,1,3,3-tetramethylbutylperoxy-2-ethylhexanoate, tert-amylperoxy-2-ethylhexanoate, dibenzoyl peroxide, tert-butylperoxy-2-ethylhexanoate, tert-butylperoxy ethyl acetate, tert-butylperoxy isobutylate, and 1,4-di(tert-butylperoxy carbo)cyclohexane, is specifically a liquid thermal initiator having a low initiation temperature, and may include tert-butyl peroxypivalate which generates little gas during an initiation reaction.

The polymerization initiator is easily dissolved in an organic solvent and may form a radical by being dissociated by heat at 30°C to 80°C. The crosslinking reaction of the crosslinking compound may be promoted by the radical thus formed, and a polymer matrix (network) with secured mechanical strength and ionic conductivity may be formed.

The polymerization initiator may be included in an amount of 0.01 part by weight to 20 parts by weight, and specifically, 0.1 part by weight to 10 parts by weight in the composition for forming a gel polymer electrolyte based on 100 parts by weight of the crosslinking compound. If the polymerization initiator is included in the above range, gel polymer electrolyte properties may be secured by increasing a gel polymer conversion rate, and wetting of an electrolyte solution with respect to an electrode may be improved by preventing a pre-gel reaction.

### 5) Additive

Also, the composition for forming a gel polymer electrolyte of the present invention may further include an additive capable of forming a more stable ion conductive film on a surface of the electrode, if necessary, in order to further improve low-temperature high rate discharge characteristics, high-temperature stability, overcharge prevention, and an effect of improving swelling during high-temperature storage.

The additive may include at least one selected from the group consisting of a sultone-based compound, a halogen-substituted carbonate-based compound, a nitrile-based compound, a cyclic carbonate-based compound, a sulfite-based compound, a sulfone-based compound, a sulfate-based compound, a phosphate-based or phosphite-based compound, a borate-based compound, and a lithium salt-based compound.

The sultone-based compound may include at least one compound selected from the group consisting of 1,3-propane sultone (PS), 1,4-butane sultone, ethenesultone, 1,3-propene sultone (PRS), 1,4-butene sultone, and 1-methyl-1,3-propene sultone, and may be included in an amount of 5 wt% or less based on a total weight of a precursor composition for a polymer electrolyte. In a case in which the amount of the sultone-based compound in the precursor composition for a polymer electrolyte is greater than 5 wt%, an increase in resistance and a degradation of output may occur due to formation of an excessively thick film on the surface of the electrode, and the resistance may be increased due to the excessive amount of the additive in the precursor composition for a polymer electrolyte to degrade output characteristics.

Also, the halogen-substituted carbonate-based compound may include fluoroethylene carbonate (FEC), and may be included in an amount of 5 wt% or less based on the total weight of the precursor composition for a polymer electrolyte. In a case in which the amount of the halogen-substituted carbonate-based compound in the precursor composition for a polymer electrolyte is greater than 5 wt%, cell swelling performance may be degraded.

Furthermore, the nitrile-based compound may include at least one compound selected from the group consisting of succinonitrile (SN), adiponitrile (Adn), acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

The nitrile-based compound may be included in an amount of 8 wt% or less based on the total weight of the precursor composition for a polymer electrolyte. In a case in which the total amount of the nitrile-based compound in the precursor composition for a polymer electrolyte is greater than 8 wt%, since the film formed on the surface of the electrode is increased to increase the resistance, battery performance may be degraded.

Also, the cyclic carbonate-based compound may include vinylene carbonate (VC) or vinyl ethylene carbonate, and may be included in an amount of 5 wt% or less based on the total weight of the precursor composition for a polymer electrolyte. In a case in which the amount of the cyclic carbonate-based compound in the precursor composition for a polymer electrolyte is greater than 5 wt%, cell swelling inhibition performance may be degraded.

The sulfite-based compound may include at least one compound selected from the group consisting of ethylene sulfite, methyl ethylene sulfite, ethyl ethylene sulfite, 4,5-dimethyl ethylene sulfite, 4,5-diethyl ethylene sulfite, propylene sulfite, 4,5-dimethyl propylene sulfite, 4,5-diethyl propylene sulfite, 4,6-dimethyl propylene sulfite, 4,6-diethyl propylene sulfite, and 1,3-butylene glycol sulfite, and may be included in an amount of 5 wt% or less based on the total weight of the precursor composition.

The sulfone-based compound may include at least one compound selected from the group consisting of divinyl sulfone, dimethyl sulfone, diethyl sulfone, methylethyl sulfone, and methylvinyl sulfone, and may be included in an amount of 5 wt% or less based on the total weight of the precursor composition.

The sulfate-based compound may include ethylene sulfate (Esa), trimethylene sulfate (TMS), or methyl trimethylene sulfate (MTMS), and may be included in an amount of 5 wt% or less based on the total weight of the precursor composition.

The phosphate-based or phosphite-based compound may include at least one compound selected from the group consisting of lithium difluoro(bisoxalato)phosphate, lithium difluorophosphate, tris(trimethylsilyl)phosphate (TMSPa), tris(trimethylsilyl)phosphite (TMSPi), tris(2,2,2-trifluoroethyl)phosphate (TFEPa), and tris(trifluoroethyl)phosphite (TFEPi), and may be included in an amount of 3 wt% or less based on the total weight of the precursor composition for a polymer electrolyte.

The borate-based compound may include tetraphenylborate, lithium oxalyldifluoroborate (LiODFB), or lithium bis(oxalato)borate (LiB(C₂O₄)₂, LiBOB), and may be included in an amount of 3 wt% or less based on the total weight of the precursor composition for a polymer electrolyte.

The lithium salt-based compound is a compound different from the lithium salt included in the precursor composition, wherein the lithium salt-based compound may include LiPO₂F₂ or LiBF₄, and may be included in an amount of 3 wt% or less based on the total weight of the precursor composition for a polymer electrolyte.

Specifically, the additive may include the halogen-substituted carbonate-based compound, i.e., fluoroethylene carbonate (FEC).

Furthermore, two or more other additives may be mixed and included, and a total weight of the additives included may be 20 wt% or less, and specifically, 0.01 wt% to 10 wt% based on the total weight of the precursor composition for a polymer electrolyte.

### Gel Polymer Electrolyte

Also, the present invention provides a gel polymer electrolyte. The gel polymer electrolyte may be prepared from the above-described composition for forming a gel polymer electrolyte. More specifically, the gel polymer electrolyte may be formed by a crosslinking reaction of the above-described composition for forming a gel polymer electrolyte or the crosslinking reaction of the crosslinking compound included in the above-described composition for forming a gel polymer electrolyte.

Specifically, the gel polymer electrolyte includes a lithium salt; an organic solvent; and a polymer matrix formed by a crosslinking reaction of the crosslinking compound represented by Formula 1 below.

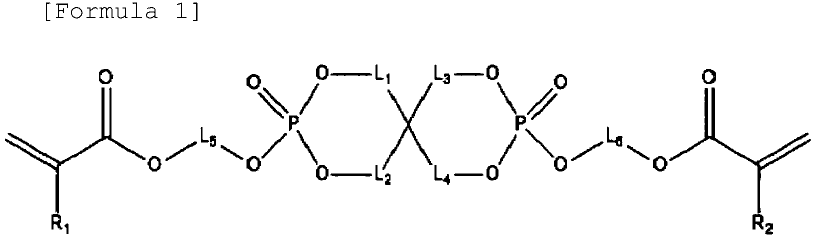

In Formula 1, L₁, L₂, L₃, and L₄ are each independently selected from a direct bond or an alkylene group having 1 to 3 carbon atoms, L₅ and L₆ are each independently an alkylene group having 1 to 10 carbon atoms in which at least one methylene group may be substituted with an ether group and at least one hydrogen is substituted with fluorine, and R₁ and R₂ are each independently selected from hydrogen, an alkyl group having 1 to 3 carbon atoms, or a halogen.

Since the gel polymer electrolyte may have excellent oxidation stability and flame retardancy by including the polymer matrix which is formed by the crosslinking compound represented by Formula 1, thermal safety and prevention of ignition or explosion of a lithium secondary battery, in which the gel polymer electrolyte is used, may be ensured and excellent life performance may be achieved.

Detailed descriptions of the lithium salt, the organic solvent, and the crosslinking compound represented by Formula 1 are as described above.

### Lithium Secondary Battery

Furthermore, the present invention provides a lithium secondary battery including the above-described gel polymer electrolyte.

Specifically, the present invention provides a lithium secondary battery including a positive electrode; a negative electrode facing the positive electrode; a separator disposed between the positive electrode and the negative electrode; and the above-described gel polymer electrolyte. Also, the present invention provides a lithium secondary battery including a positive electrode; a negative electrode facing the positive electrode; a separator disposed between the positive electrode and the negative electrode; and a gel polymer electrolyte formed from the above-described composition for forming a gel polymer electrolyte.

Specifically, after an electrode assembly is prepared by disposing the separator between the positive electrode and the negative electrode, the lithium secondary battery may be prepared by putting the assembled electrode assembly into a battery case, injecting the composition for forming a gel polymer electrolyte of the present invention, and performing a crosslinking reaction (thermal polymerization) of the crosslinking compound.

Since the composition for forming a gel polymer electrolyte and the gel polymer electrolyte have been described above, the positive electrode, the negative electrode, and the separator will be described below.

### 1) Positive Electrode

The positive electrode may include a positive electrode active material.

The lithium transition metal oxide is a compound capable of reversibly intercalating and deintercalating lithium, wherein the lithium transition metal oxide may include at least one selected from the group consisting of lithium-cobalt-based oxide (e.g., LiCoO₂, etc.), lithium-nickel-based oxide (e.g., LiNiO₂, etc.), lithium-manganese-based oxide (e.g., LiMnO₂, LiMn₂O₄, etc.), lithium-nickel-manganese-based oxide (e.g., LiNi_{1-Y}Mn_{Y}O₂ (where 0<Y<1), LiMn_{2-Z}Ni_{z}O₄ (where 0<Z<2), etc.), lithium-nickel-cobalt-based oxide (e.g., LiNi_{1-Y1}Co_{Y1}O₂ (where 0<Y1<1), lithium-manganese-cobalt-based oxide (e_{.}g_{.}, LiCo_{1-Y2}Mn_{Y2}O₂ (where 0<Y2<1), LiMn_{2-Z1}Co_{z1}O₄ (where 0<Z1<2), etc.), lithium-nickel-manganese-cobalt-based oxide (e.g., Li(NiₚCo_{q}Mnᵣ₁)O₂ (where 0<p<1, 0<q<1, 0<r1<1, and p+q+r1=1) or Li(Niₚ₁Co_{q1}Mnᵣ₂)O₄ (where 0<p1<2, 0<q1<2, 0<r2<2, and p1+q1+r2=2), etc.), lithium-nickel-cobalt-manganese-transition metal (M) oxide (e_{.}g_{.}, Li(Niₚ₂Co_{q2}Mnᵣ₃M_{S2})O₂ (where M is selected from the group consisting of aluminum (Al), iron (Fe), vanadium (V), chromium (Cr), titanium (Ti), tantalum (Ta), magnesium (Mg), and molybdenum (Mo), and p2, q2, r3, and s2 are atomic fractions of each independent elements, wherein 0<p2<1, 0<q2<1, 0<r3<1, 0<S2<1, and p2+q2+r3+S2=1), etc.), a high-nickel lithium transition metal composite oxide, an overlithiated manganese-rich oxide, a lithium iron phosphate (e.g., LiFePO₄, etc.), and an overlithiated layered oxide (OLO).

The high-nickel lithium transition metal composite oxide may include 50 mol% or more, and specifically, 60 mol% or more of nickel based on the total number of moles of transition metals included in the lithium transition metal composite oxide. Specifically, the high-nickel lithium transition metal composite oxide includes nickel; and at least one selected from manganese, cobalt, and aluminum, as transition metals, and may include nickel in an amount of 50 mol% or more, particularly 60 mol% or more, and more particularly 60 mol% to 90 mol% based on the total number of moles of the transition metals.

Also, the lithium transition metal oxide may be a compound represented by Formula 5 below.

[Formula 5] Li₁₊ₓ(NiₐCo_{b}Mn_{c}M_{d})O₂

In Formula 5, M is at least one selected from tungsten (W), copper (Cu), iron (Fe), vanadium (V), chromium (Cr), titanium (Ti), zirconium (Zr), zinc (Zn), aluminum (Al), indium (In), tantalum (Ta), yttrium (Y), lanthanum (La), strontium (Sr), gallium (Ga), scandium (Sc), gadolinium (Gd), samarium (Sm), calcium (Ca), cerium (Ce), niobium (Nb), magnesium (Mg), boron (B), and molybdenum (Mo), and 1+x, a, b, c, and d are atomic fractions of each independent elements, wherein 0≤x≤0.2, 0.50≤a<1, 0<b≤0.30, 0<c≤0.30, 0≤d≤0.1, and a+b+c+d=1.

Preferably, a, b, c, and d may satisfy 0.60≤a≤0.95, 0.025≤b≤0.25, 0.025≤c≤0.25, and 0≤d≤0.05, respectively. Also, a, b, c, and d may satisfy 0.80≤a≤0.95, 0.025≤b≤0.15, 0.025≤c≤0.15, and 0≤d≤0.05, respectively. Furthermore, a, b, c, and d may satisfy 0.85≤a≤0.90, 0.05≤b≤0.10, 0.05≤c≤0.10, and 0≤d≤0.03, respectively.

The lithium transition metal oxide may be an overlithiated manganese-rich oxide. The overlithiated manganese-rich oxide may include manganese (Mn) among total metals excluding lithium in an amount of 50 mol% or more, and a molar ratio of lithium to transition metal may be greater than 1.

Specifically, the overlithiated manganese-rich oxide may be a compound represented by Formula 6 below.

[Formula 6] Li₁₊ₛ[NiₜCoᵤMnᵥM¹_{w}]O_{2+z},

In Formula 6, 0.05≤s≤1, 0≤t≤0.5, 0≤u≤0.3, 0.5≤v<1.0, 0≤w≤0.2, and 0≤z≤1, preferably 0.05≤s≤1.0, 0.1≤t≤0.5, 0≤u≤0.1, 0.5≤v<1.0, 0≤w≤0.2, and 0≤z≤1, and more preferably 0.10≤s≤0.50, 0.1≤t≤0.5, 0≤u≤0.1, 0.6≤v<1.0, 0≤w≤0.1, and 0≤z≤0.50. M¹ may be at least one selected from W, Cu, Fe, V, Cr, Ti, Zr, Zn, Al, In, Ta, Y, La, Sr, Ga, Sc, Gd, Sm, Ca, Ce, Nb, Mg, B, and Mo.

More specifically, the overlithiated manganese-rich oxide may be a compound represented by Formula 6-1 below.

[Formula 6-1] XLi₂MnO₃·(1-X)Li[Ni_{1-y-z-w}Mn_{y}Co_{z}M¹_{w}]O₂

In Formula 6-1, 0.1≤X≤0.5, 0.5≤y<1, 0≤z≤0.3, and 0≤w≤0.2, preferably 0.2≤X≤0.5, 0.5≤y<1, 0≤z≤0.1, and 0≤w≤0.2, and more preferably 0.3≤X≤0.5, 0.6≤y<1, 0≤z≤0.1, and 0≤w≤0.2. M¹ may be at least one selected from W, Cu, Fe, V, Cr, Ti, Zr, Zn, Al, In, Ta, Y, La, Sr, Ga, Sc, Gd, Sm, Ca, Ce, Nb, Mg, B, and Mo.

The positive electrode may include a positive electrode current collector; and a positive electrode active material layer disposed on at least one surface of the positive electrode current collector. In this case, the positive electrode active material layer may include a positive electrode active material.

The positive electrode current collector is not particularly limited as long as it has high conductivity without causing chemical changes in the battery. Specifically, the positive electrode current collector may include at least one selected from the group consisting of copper, stainless steel, aluminum, nickel, titanium, fired carbon, and an aluminum-cadmium alloy, and may preferably include aluminum.

The positive electrode current collector may typically have a thickness of 3 µm to 500 µm.

Microscopic irregularities may be formed on the surface of the positive electrode current collector to improve adhesion of a positive electrode active material. The positive electrode current collector, for example, may be used in various shapes such as that of a film, a sheet, a foil, a net, a porous body, a foam body, a non-woven fabric body, and the like.

The positive electrode active material layer is disposed on at least one surface of the positive electrode current collector. Specifically, the positive electrode active material layer may be disposed on one surface or both surfaces of the positive electrode current collector.

The positive electrode active material may be included in an amount of 80 wt% to 99 wt%, and preferably, 92 wt% to 98.5 wt% in the positive electrode active material layer in consideration of exhibition of sufficient capacity of the positive electrode active material.

The positive electrode active material layer may further include a binder and/or a conductive agent together with the above-described positive electrode active material.

The binder is a component that assists in binding between the conductive agent and the active material and in binding with the current collector, and may specifically include at least one selected from the group consisting of polyvinylidene fluoride, polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene terpolymer (EPDM), a sulfonated EPDM, a styrene-butadiene rubber, and a fluoro rubber, and preferably, polyvinylidene fluoride.

The binder may be included in an amount of 1 wt% to 20 wt%, and preferably, 1.2 wt% to 10 wt% in the positive electrode active material layer in terms of sufficiently securing a binding force between components such as the positive electrode active material.

The conductive agent may be used to assist and improve conductivity in the secondary battery, and is not particularly limited as long as it has conductivity without causing chemical changes. Specifically, the positive electrode conductive agent may include at least one selected from the group consisting of graphite such as natural graphite or artificial graphite; carbon black such as carbon black, acetylene black, Ketjen black, channel black, furnace black, lamp black, and thermal black; conductive fibers such as carbon fibers or metal fibers; conductive tubes such as carbon nanotubes; fluorocarbon; metal powder such as aluminum powder and nickel powder; conductive whiskers such as zinc oxide whiskers and potassium titanate whiskers; conductive metal oxide such as titanium oxide; and polyphenylene derivatives, and may preferably include carbon black in terms of improving the conductivity.

The conductive agent may be included in an amount of 1 wt% to 20 wt%, and preferably, 1.2 wt% to 10 wt% in the positive electrode active material layer in terms of sufficiently ensuring the electrical conductivity.

The positive electrode active material layer may have a thickness of 30 µm to 400 µm, and preferably, 40 µm to 110 µm.

The positive electrode may be prepared by coating a positive electrode slurry including the positive electrode active material as well as optionally the binder, the conductive agent, and a solvent for forming a positive electrode slurry on the positive electrode current collector, and then drying and rolling the coated positive electrode current collector.

The solvent for forming a positive electrode slurry may include an organic solvent such as NMP (N-methyl-2-pyrrolidone). A solid content of the positive electrode slurry may be in a range of 40 wt% to 90 wt%, and specifically, 50 wt% to 80 wt%.

### 2) Negative Electrode

The negative electrode may face the positive electrode.

The negative electrode may include a negative electrode current collector; and a negative electrode active material layer disposed on at least one surface of the negative electrode current collector.

The negative electrode current collector is not particularly limited as long as it has high conductivity without causing chemical changes in the battery. Specifically, copper, stainless steel, aluminum, nickel, titanium, fired carbon, copper or stainless steel that is surface-treated with one of carbon, nickel, titanium, silver, or the like, and an aluminum-cadmium alloy may be used as the negative electrode current collector.

The negative electrode current collector may typically have a thickness of 3 µm to 500 µm.

Microscopic irregularities may be formed on the surface of the negative electrode current collector to improve adhesion of a negative electrode active material. The negative electrode current collector, for example, may be used in various shapes such as that of a film, a sheet, a foil, a net, a porous body, a foam body, a non-woven fabric body, and the like.

The negative electrode active material layer is disposed on at least one surface of the negative electrode current collector. Specifically, the negative electrode active material layer may be disposed on one surface or both surfaces of the negative electrode current collector.

The negative electrode active material layer may include a negative electrode active material.

The negative electrode active material is a material capable of reversibly intercalating/deintercalating lithium ions, wherein it may include at least one selected from the group consisting of a carbon-based active material, a (semi)metal-based active material, and lithium metal, and may specifically include at least one selected from a carbon-based active material and a (semi)metal-based active material.

The carbon-based active material may include at least one selected from the group consisting of artificial graphite, natural graphite, hard carbon, soft carbon, carbon black, graphene, and fibrous carbon, and may preferably include at least one selected from the group consisting of artificial graphite and natural graphite.

An average particle diameter (D₅₀) of the carbon-based active material may be in a range of 10 µm to 30 µm, and preferably, 15 µm to 25 µm in terms of ensuring structural stability during charge and discharge and reducing a side reaction with the electrolyte solution.

Specifically, the (semi)metal-based active material may include at least one (semi)metal selected from the group consisting of copper (Cu), nickel (Ni), sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminum (Al), vanadium (V), titanium (Ti), and tin (Sn); an alloy of lithium and at least one (semi)metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn; an oxide of at least one (semi)metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn; lithium titanium oxide (LTO); or lithium vanadium oxide.

More specifically, the (semi)metal-based active material may include a silicon-based active material.

The silicon-based active material may include a compound represented by SiOₓ (0≤x<2). With respect to SiO₂, since it does not react with lithium ions, it may not store lithium, and thus, it is desirable that x is within the above range, and more preferably, the silicon-based active material may be SiO.

An average particle diameter (D₅₀) of the silicon-based active material may be in a range of 1 µm to 30 µm, and preferably, 2 µm to 15 µm in terms of ensuring the structural stability during charge and discharge and reducing the side reaction with the electrolyte solution.

The negative electrode active material may be included in an amount of 60 wt% to 99 wt%, and preferably, 75 wt% to 95 wt% in the negative electrode active material layer.

The negative electrode active material layer may further include a binder and/or a conductive agent together with the negative electrode active material.

The binder is used to improve the performance of the battery by enhancing adhesion between the negative electrode active material layer and the negative electrode current collector, wherein the binder, for example, may include at least one selected from the group consisting of polyvinylidene fluoride-hexafluoropropylene copolymer (PVDF-co-HFP), polyvinylidene fluoride (PVDF), polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, poly acrylic acid, an ethylene-propylene-diene monomer (EPDM), a sulfonated EPDM, a styrene-butadiene rubber (SBR), a fluorine rubber, and a material having hydrogen thereof substituted with lithium (Li), Na, or Ca, and may also include various copolymers thereof.

The binder may be included in an amount of 0.5 wt% to 10 wt%, and preferably, 1 wt% to 5 wt% in the negative electrode active material layer.

The conductive agent is not particularly limited as long as it has conductivity without causing chemical changes in the battery, and, for example, a conductive material, such as: graphite such as natural graphite or artificial graphite; carbon black such as carbon black, acetylene black, Ketjen black, channel black, furnace black, lamp black, and thermal black; conductive fibers such as carbon fibers or metal fibers; conductive tubes such as carbon nanotubes; fluorocarbon; metal powder such as aluminum powder and nickel powder; conductive whiskers such as zinc oxide whiskers and potassium titanate whiskers; conductive metal oxide such as titanium oxide; or polyphenylene derivatives, may be used.

The conductive agent may be included in an amount of 0.5 wt% to 10 wt%, and preferably, 1 wt% to 5 wt% in the negative electrode active material layer.

The negative electrode active material layer may have a thickness of 10 µm to 100 µm, and preferably, 50 µm to 80 µm.

The negative electrode may be prepared by coating at least one surface of the negative electrode current collector with a negative electrode slurry including the negative electrode active material, the binder, the conductive agent, and/or a solvent for forming a negative electrode slurry, and then drying and rolling the coated negative electrode current collector.

The solvent for forming a negative electrode slurry, for example, may include at least one selected from the group consisting of distilled water, NMP (N-methyl-2-pyrrolidone), ethanol, methanol, and isopropyl alcohol, and specifically, NMP, in terms of facilitating dispersion of the negative electrode active material, the binder, and/or the conductive agent. A solid content of the negative electrode slurry may be in a range of 30 wt% to 80 wt%, and specifically, 40 wt% to 70 wt%.

### 3) Separator

Also, a conventional porous polymer film typically used as a separator, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, may be used alone or in a lamination therewith as the separator, and a typical porous nonwoven fabric, for example, a nonwoven fabric formed of high melting point glass fibers or polyethylene terephthalate fibers may be used, but the present invention is not limited thereto. Furthermore, a coated separator including a ceramic component or a polymer material may be used to secure heat resistance or mechanical strength, and the separator having a single layer or multilayer structure may be optionally used.

A shape of the lithium secondary battery of the present invention is not particularly limited, but a cylindrical type using a can, a prismatic type, a pouch type, or a coin type may be used.

Hereinafter, the present invention will be described in detail, according to specific examples. However, the following examples are merely presented to exemplify the present invention, and the scope of the present invention is not limited thereto. It will be apparent to those skilled in the art that various modifications and alterations are possible within the scope and technical spirit of the present invention. Such modifications and alterations fall within the scope of claims included herein.

### Examples and Comparative Examples

### Preparation Example 1: Crosslinking Compound Preparation: Synthesis of Spirocyclic Pentaerythritol Diphosphate Perfluorinated Ether Acrylate (SPDFA, Formula 1-1)

### (1) Step 1: Synthesis of Spirocyclic Pentaerythritol Bisphosphorate Diphosphoryl Chloride (SPDPC)

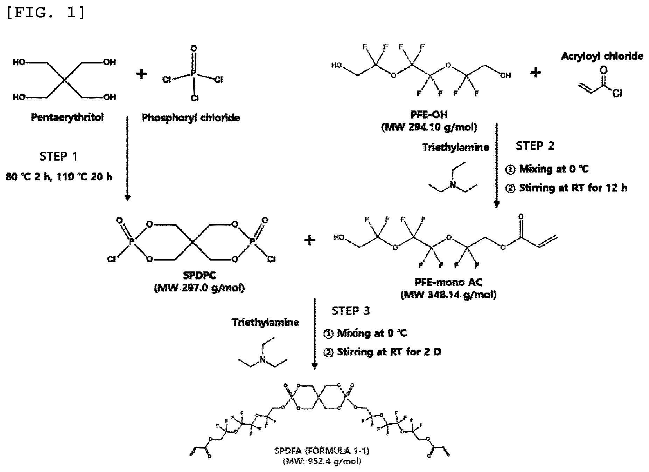

A schematic view for synthesizing spirocyclic pentaerythritol bisphosphorate diphosphoryl chloride (SPDPC) from pentaerythritol and phosphorus oxychloride was illustrated in FIG. 1 (Step 2). First, pentaerythritol (6.81 g, 50 mmol) was put in a double jacket and cooled to 0°C, and phosphorus oxychloride (53.67 g, 350 mmol) was then slowly added dropwise while stirring. After the dropwise addition was completed, temperature of a mixed solution was increased to 80°C and the mixed solution was stirred for 2 hours, the temperature was then increased to 110°C and a reaction was performed for 20 hours. A compound after completion of the reaction was filtered, washed with tetrahydrofuran and ethanol, and then vacuum-dried at 80°C for 12 hours to obtain spirocyclic pentaerythritol bisphosphorate diphosphoryl chloride, and a chemical structure of the product was confirmed by a nuclear magnetic resonance (NMR) spectrum.

### [Confirmation of Chemical Structure of Spirocyclic Pentaerythritol Bisphosphorate Diphosphoryl Chloride (NMR)]

¹H NMR (DMSO), δ (ppm): 4.25-4.1 (dd, 4H)
³¹P NMR (CDCl₃), δ (ppm): -7.95

### (2) Step 2: Synthesis of Fluorinated Ether Monoacrylate (PFE-mono AC)

A schematic view for synthesizing fluorinated ether monoacrylate (PFE-mono AC) from perfluoroether diol (PFE-OH) was illustrated in FIG. 1 (Step 2). First, 10 g of 1H,1H,8H,8H-perfluoro-3,6-dioxaoctan-1,8-diol (PFE-OH) and 3.08 g of acryloyl chloride, as reactants, were dissolved in 56.6 ml of a tetrahydrofuran (THF) solvent and put in a double jacket. After adding all of the reactants and 4.15 g of a triethyl amine (TEA) catalyst to THF at 0°C, reaction temperature was increased to 25°C and a reaction was performed for 12 hours. After the THF solvent was vacuum-dried from a solution generated, unreacted substances and side reactants were completely removed through a column process, and a chemical structure of a product obtained was confirmed by an NMR spectrum.

### [Confirmation of Chemical Structure of Fluorinated Ether Monoacrylate (NMR)]

¹H NMR (CDCl₃), δ (ppm): 6.54-6.5 (dd, 1H), 6.22-6.16 (dd, 1H), 6.05-5.98 (dd, 1H), 4.6-4.55 (t, 2H), 3.95-3.9 (q, 2H), 2.54-5.48 (t, 1H)

### (3) Step 3: Synthesis of Spirocyclic Pentaerythritol Diphosphate Perfluorinated Ether Acrylate (SPDFA)

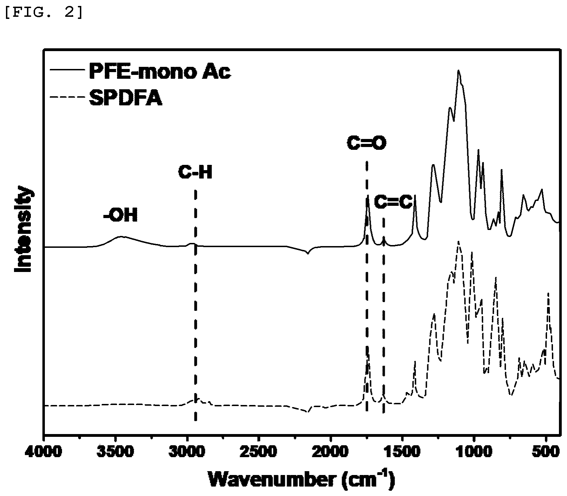

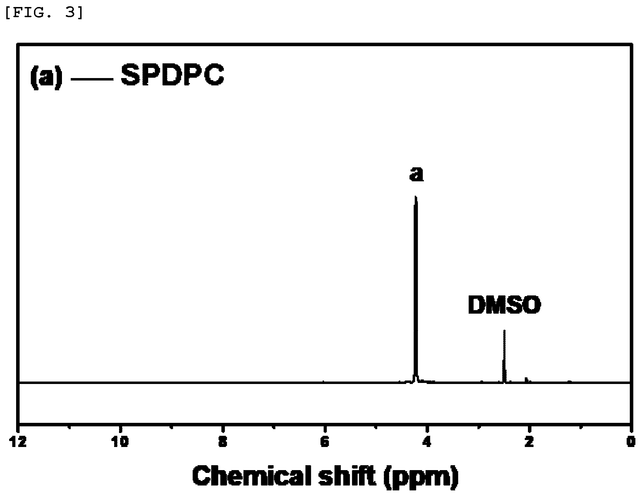

A schematic view for synthesizing spirocyclic pentaerythritol diphosphate perfluorinated ether acrylate (SPDFA) was illustrated in FIG. 1 (Step 3). First, 10.0 g of spirocyclic pentaerythritol bisphosphorate diphosphoryl chloride (SPDPC) and 9.8 g of fluorinated ether monoacrylate (PFE-mono AC), which had been prepared above, as reactants, were dissolved in 192.6 ml of an acetonitrile solvent and put in a double jacket. After adding all of the reactants and 18.2 g of a triethyl amine catalyst to THF at 0°C, reaction temperature was increased to 25°C and a reaction was performed for 48 hours (2 days). After the acetonitrile solvent was vacuum-dried from a solution generated, unreacted substances and side reactants were completely removed through a column process, and a chemical structure of a product obtained was confirmed by Fourier-transform infrared (FT-IR) results in FIG. 2 and ¹H NMR spectrum results in FIG. 3. A molecular weight of the spirocyclic pentaerythritol diphosphate perfluorinated ether acrylate (SPDFA) prepared above was 952.4 g/mol.

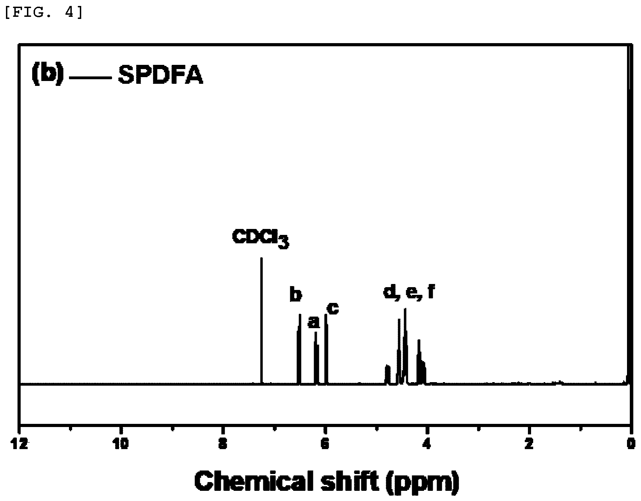

Specifically, FIG. 2 is the results of FT-IR spectra of the fluorinated ether monoacrylate (PFE-mono AC) and the spirocyclic pentaerythritol diphosphate perfluorinated ether acrylate (SPDFA) which were prepared by Steps 2 and 3. Also, FIG. 3 is the results of a ¹H NMR spectrum of the spirocyclic pentaerythritol bisphosphorate diphosphoryl chloride (SPDPC) prepared by Step 1. Furthermore, FIG. 4 is results of a ¹H NMR spectrum of the spirocyclic pentaerythritol diphosphate perfluorinated ether acrylate (SPDFA) prepared by Step 3.

### Example 1: Preparation of Composition for Forming Gel Polymer Electrolyte

A liquid electrolyte was prepared by dissolving lithium hexafluorophosphate (LiPF₆) with a concentration of 1.15 M in a mixed solvent of ethylene carbonate (EC)/ethyl methyl carbonate (EMC)/diethyl carbonate (DEC) (volume ratio 30/50/20), and then adding fluoroethylene carbonate (FEC). The FEC was added in an amount of 5 wt% in the liquid electrolyte. 9 g of the liquid electrolyte and 1 g of a spirocyclic pentaerythritol diphosphate perfluorinated ether acrylate (SPDFA) crosslinking compound were mixed, and 0.01 g, which was 1 part by weight based on 100 parts by weight of the crosslinking compound, of t-butylperoxypivalate, a polymerization initiator, was added and stirred to prepare a composition for forming a gel polymer electrolyte.

### Example 2: Preparation of Gel Polymer Electrolyte

The composition for forming a gel polymer electrolyte prepared in Example 1 was thermally cross-linked at 70°C for 1 hour to prepare a gel polymer electrolyte (SPDFA GPE) in which a polymer matrix was formed by the crosslinking compound.

### Example 3: Preparation of Lithium Secondary Battery

A positive electrode active material (Li [Ni_{0.6}Co_{0.2}Mn_{0.2}]O₂), a conductive agent (Super P), and a binder (PVdF) were added to a N-methylpyrrolidone (NMP) solvent in a weight ratio of 95:3:2 to prepare a positive electrode slurry. One surface of a 15 µm thick aluminum positive electrode current collector was coated with the positive electrode slurry, dried, and rolled to prepare a positive electrode.

A negative electrode active material (graphite), a conductive agent (Super P), and a binder (PVdF) were added to a N-methylpyrrolidone solvent in a weight ratio of 90:3:7 to prepare a negative electrode slurry. One surface of a 15 µm thick copper negative electrode current collector was coated with the negative electrode slurry, dried, and rolled to prepare a negative electrode.

An electrode assembly was prepared by disposing a polyethylene porous separator between the above-prepared positive electrode and negative electrode, the electrode assembly was accommodated in a battery case, the composition for forming a gel polymer electrolyte of Example 1 was injected into the battery case, the battery case was sealed, and a heat treatment was then performed at 70°C to prepare a lithium secondary battery in which a gel polymer electrolyte was formed from the composition for forming a gel polymer electrolyte.

### Comparative Example 1: Preparation of Liquid Electrolyte

A liquid electrolyte was prepared by dissolving lithium hexafluorophosphate (LiPF₆) with a concentration of 1.15 M in a mixed solvent of ethylene carbonate (EC) /ethyl methyl carbonate (EMC)/diethyl carbonate (DEC) (volume ratio 30/50/20), and then adding fluoroethylene carbonate (FEC). The fluoroethylene carbonate was added in an amount of 5 wt% in the liquid electrolyte.

### Comparative Example 2: Preparation of Lithium Secondary Battery

A lithium secondary battery was prepared in the same manner as in Example 3 except that the liquid electrolyte of Comparative Example 1 was used instead of the composition for forming a gel polymer electrolyte of Example 1 and a separate heat treatment for forming a gel polymer electrolyte was not performed.

### Comparative Example 3: Preparation of Composition for Forming Gel Polymer Electrolyte

A composition for forming a gel polymer electrolyte was prepared in the same manner as in Example 1 except that 1 g of a compound represented by Formula A below was added instead of 1 g of the spirocyclic pentaerythritol diphosphate perfluorinated ether acrylate (SPDFA) crosslinking compound to the composition for forming a gel polymer electrolyte. 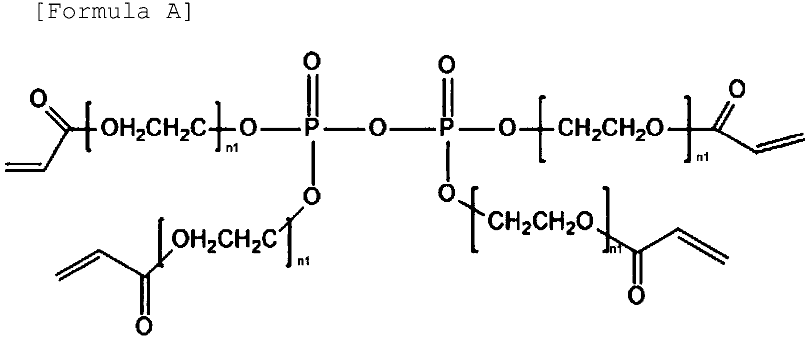 (In Formula A, n1 is 3)

### Comparative Example 4: Preparation of Gel Polymer Electrolyte

The composition for forming a gel polymer electrolyte prepared in Comparative Example 3 was thermally cross-linked at 70°C for 1 hour to prepare a gel polymer electrolyte (SPDFA GPE) in which a polymer matrix was formed by the crosslinking compound.

### Comparative Example 5: Preparation of Composition for Forming Gel Polymer Electrolyte

A composition for forming a gel polymer electrolyte was prepared in the same manner as in Example 1 except that 1 g of a compound represented by Formula B below was added instead of 1 g of the spirocyclic pentaerythritol diphosphate perfluorinated ether acrylate (SPDFA) crosslinking compound to the composition for forming a gel polymer electrolyte. 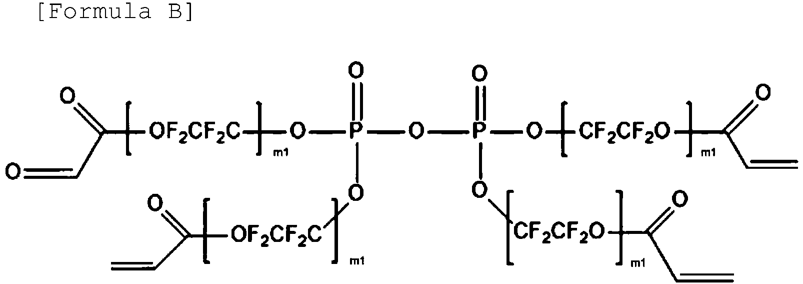 (In Formula B, m1 is 3)

### Comparative Example 6: Preparation of Gel Polymer Electrolyte

The composition for forming a gel polymer electrolyte prepared in Comparative Example 5 was thermally cross-linked at 70°C for 1 hour to prepare a gel polymer electrolyte (SPDFA GPE) in which a polymer matrix was formed by the crosslinking compound.

### Comparative Example 7: Preparation of Composition for Forming Gel Polymer Electrolyte

A composition for forming a gel polymer electrolyte was prepared in the same manner as in Example 1 except that 1 g of a compound represented by Formula C below was added instead of 1 g of the spirocyclic pentaerythritol diphosphate perfluorinated ether acrylate (SPDFA) crosslinking compound to the composition for forming a gel polymer electrolyte.

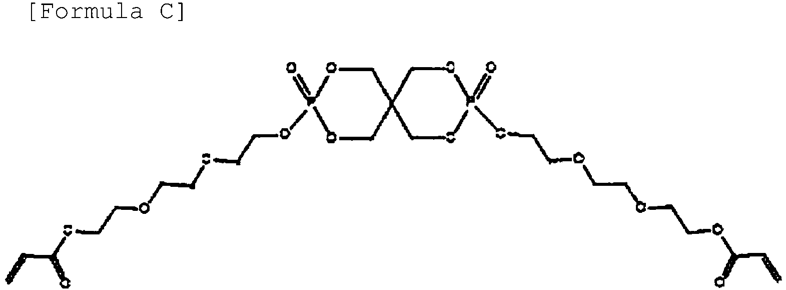

### Comparative Example 8: Preparation of Gel Polymer Electrolyte

The composition for forming a gel polymer electrolyte prepared in Comparative Example 7 was thermally cross-linked at 70°C for 1 hour to prepare a gel polymer electrolyte (SPDFA GPE) in which a polymer matrix was formed by the crosslinking compound.

### Experimental Examples

### Experimental Example 1: Confirmation of Crosslinking Reaction of Gel Polymer Electrolyte

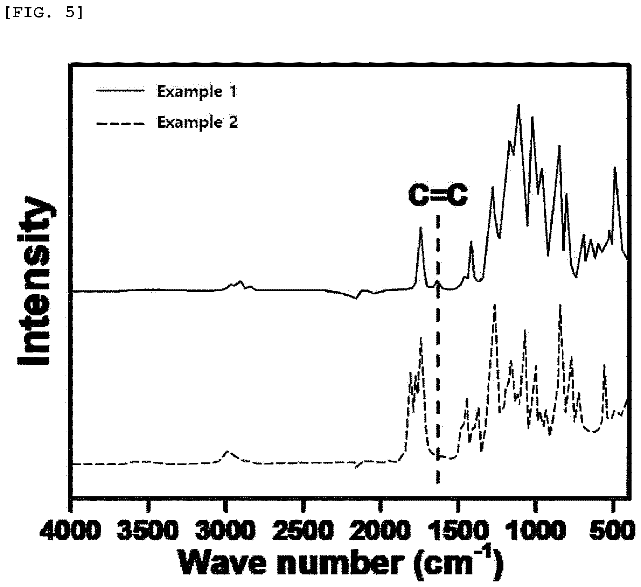

In order to confirm whether a crosslinking reaction of the gel polymer electrolyte (SPDFA GPE) of Example 2 proceeded well, FT-IR spectrum analysis was performed. The results thereof are illustrated in FIG. 5.

It was confirmed that a C=C (1635 cm⁻¹) double bond peak of the SPDFA of Example 1 disappeared in the SPDFA GPE of Example 2, and accordingly, the completion of the crosslinking reaction and the formation of the gel polymer electrolyte may be confirmed.

### Experimental Example 2: Ionic Conductivity Measurement

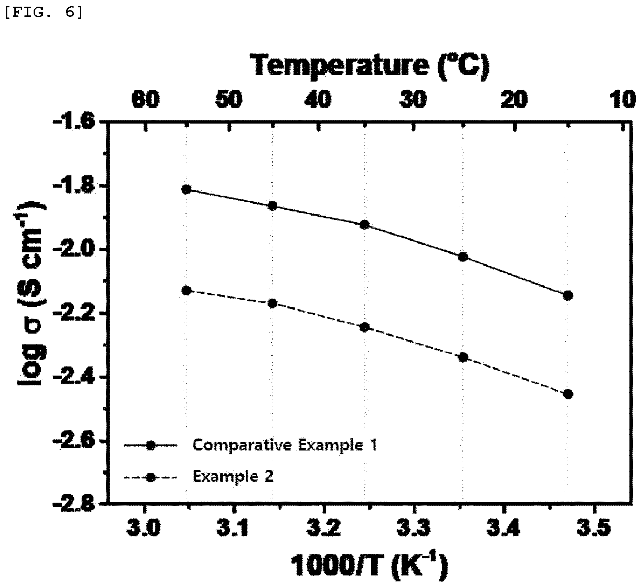

AC impedance between sandwich-type electrodes was measured for the gel polymer electrolyte of Example 2 and the liquid electrolyte of Comparative Example 1 in a frequency range of 10 Hz to 10⁶ Hz at an amplitude of 50 mV using a CH instrument (CHI 600D), and a measured value was analyzed with a frequency response analyzer to measure ionic conductivity according to temperature. The results thereof are illustrated in FIG. 6.

Referring to FIG. 6, the gel polymer electrolyte of Example 2 exhibited a high ionic conductivity of 4 × 10⁻³ S cm⁻¹ or more at room temperature.

### Experimental Example 3: Electrochemical Stability Evaluation

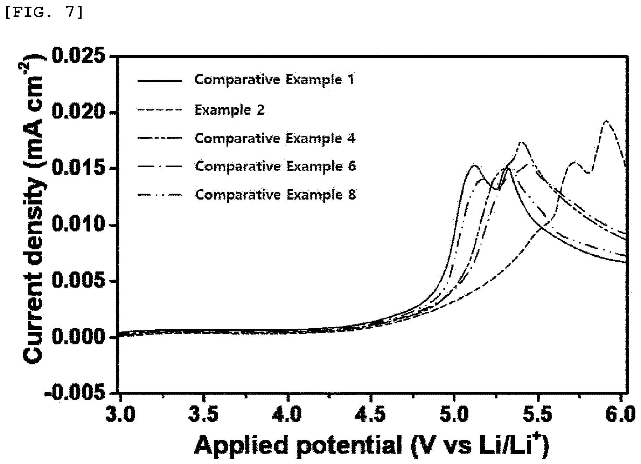

A current value according to an applied voltage was measured by linear sweep voltammetry (LSV) (scan rate 1 mV/s) in order to compare electrochemical stabilities of the gel polymer electrolyte of Example 2, the liquid electrolyte of Comparative Example 1, and the gel polymer electrolytes of Comparative Examples 4, 6, and 8, and the results thereof are illustrated in FIG. 7. FIG. 7 is a graph (oxidation scan) specifically illustrating values according to a range of the x-axis from 3.0 V to 6.0 V.

Referring to FIG. 7, it may be understood that the gel polymer electrolyte of Example 2 exhibited improved electrochemical stability in comparison to the liquid electrolyte of Comparative Example 1 and the gel polymer electrolytes of Comparative Examples 4, 6, and 8 due to a characteristic structure of the crosslinking compound according to Formula 1.

### Experimental Example 4: Cycle Characteristics Evaluation

Charging of the above-prepared lithium secondary battery of Example 3 at a constant current of 0.1 C to 4.2 V at 25°C and discharging of the lithium secondary battery at a constant current of 0.1 C to 2.5 V were set as one cycle, and a 4-cycle formation process was performed.

Thereafter, charging of the lithium secondary battery at a constant current of 0.2 C to 4.2 V at 25°C and discharging of the lithium secondary battery at a constant current of 0.2 C to 2.5 V were set as one cycle, and 300 cycles of the charging and discharging were performed.

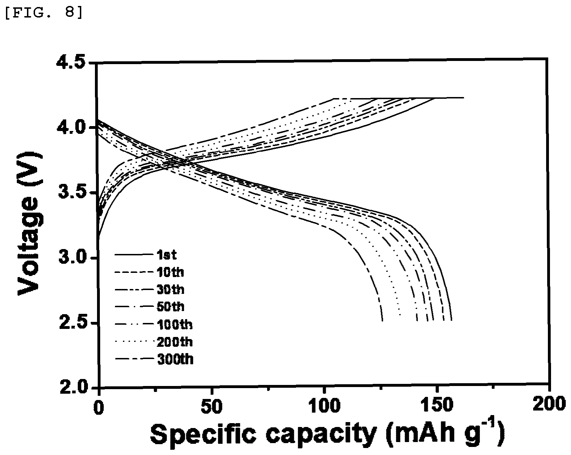

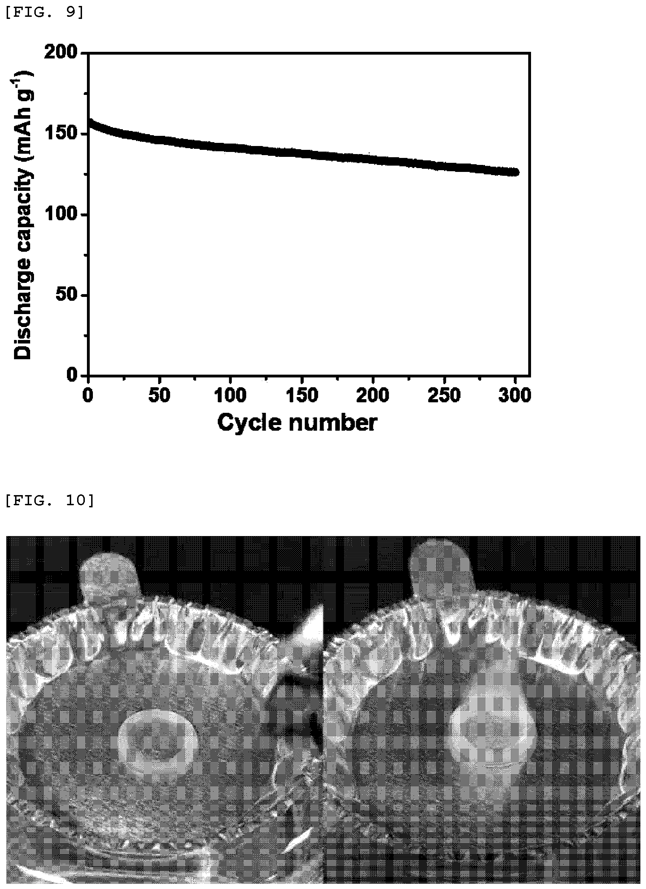

Charge and discharge curves in a 1^{st} cycle, a 10^{th} cycle, a 30^{th} cycle, a 50^{th} cycle, a 100^{th} cycle, a 200^{th} cycle, and a 300^{th} cycle of the lithium secondary battery of Example 3 are illustrated in FIG. 8. A graph illustrating a change in discharge capacity according to the cycle of the lithium secondary battery of Example 3 is illustrated in FIG. 9.

With respect to the lithium secondary battery of Example 3 using the gel polymer electrolyte of Example 3, it may be understood that charge and discharge cycles were stably performed.

### Experimental Example 5: Flame Retardant Characteristics Evaluation

### (1) Experimental Example 5-1

To evaluate flame retardant characteristics of the gel polymer electrolyte prepared in Example 2 and the liquid electrolyte of Comparative Example 1, a combustion test was performed using a flame torch.

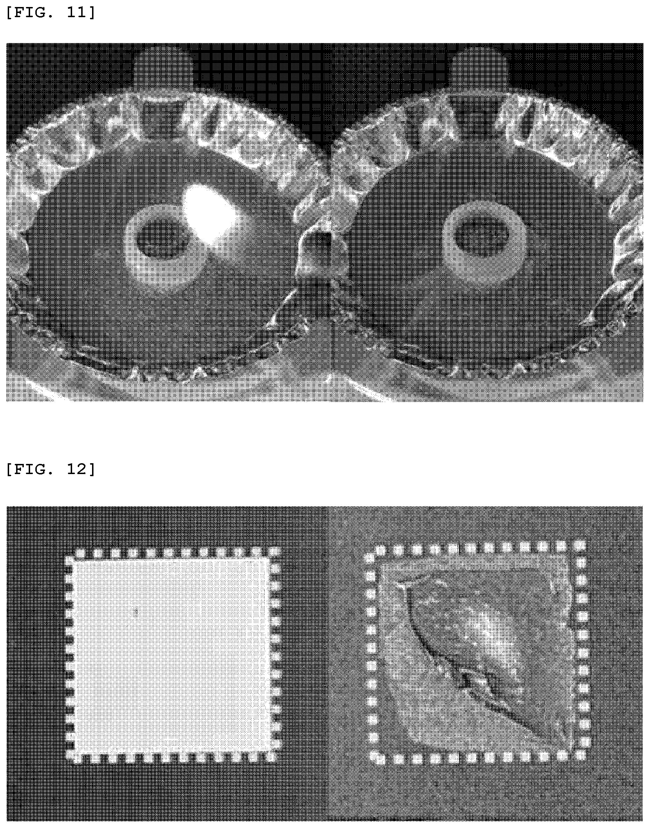

FIG. 10 is a photograph showing results before (left) and after (right) the combustion test of the liquid electrolyte of Comparative Example 1. FIG. 11 is a photograph showing results before (left) and after (right) the combustion test of the gel polymer electrolyte of Example 2.

Referring to FIG. 10, the liquid electrolyte of Comparative Example 1 exhibited high flammability when using the flame torch.

In contrast, referring to FIG. 11, it may be understood that the gel polymer electrolyte of Example 2 exhibited excellent self-extinguishing characteristics, and exhibited flame retardant characteristics in which the gel polymer electrolyte did not burn.

### (2) Experimental Example 5-2

To evaluate flame retardant characteristics of the gel polymer electrolyte prepared in Example 2, the liquid electrolyte of Comparative Example 1, and the gel polymer electrolytes of Comparative Examples 4, 6, and 8, a combustion test was performed using a flame torch.

In the gel polymer electrolyte prepared in Example 2, the liquid electrolyte of Comparative Example 1, and the gel polymer electrolytes of Comparative Examples 4, 6, and 8, a self-extinguish time test, in which 1 g of each electrolyte was set on fire and time until the sample caught fire was measured, was performed to evaluate flame retardancy. The results thereof are presented in Table 1 below.

**[Table 1]**

| | Self-extinguish time (sec) |
|---|---|
| Example 2 | 0 |
| Comparative Example 1 | 34.2 |
| Comparative Example 4 | 2.5 |
| Comparative Example 6 | 1.8 |
| Comparative Example 8 | 6.1 |

Referring to Table 1, the gel polymer electrolyte for a lithium secondary battery, which was prepared in Example 2 of the present invention, did not catch fire, but it may be understood that the liquid electrolyte of Comparative Example 1 and the gel polymer electrolytes of Comparative Examples 4, 6, and 8 exhibited inferior flame retardant characteristics than the gel polymer electrolyte of Example 2 which exhibited completely non-flammable characteristics.

### Experimental Example 6: Evaluation of Degree of Shrinkage of Separator

Two identical polyethylene separators were prepared.

After one of the two polyethylene separators was impregnated with the composition for forming a gel polymer electrolyte of Example 1, a crosslinking reaction was performed at 70°C for 1 hour to prepare a polyethylene separator impregnated with a gel polymer electrolyte. Also, no treatment was performed on the other polyethylene separator.

The polyethylene separator, which was not impregnated with the gel polymer electrolyte (without any treatment), was stored at 140°C for 30 minutes. A photograph of the polyethylene separator before storage at 140°C is illustrated on a left side of FIG. 12, and a photograph of the polyethylene separator after storage at 140°C for 30 minutes is illustrated on a right side thereof.

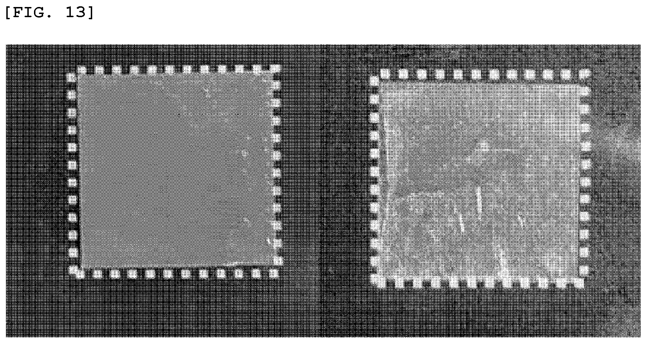

Also, the polyethylene separator impregnated with the gel polymer electrolyte was stored at 140°C for 30 minutes. A photograph of the polyethylene separator before storage at 140°C is illustrated on a left side of FIG. 13, and a photograph of the polyethylene separator after storage at 140°C for 30 minutes is illustrated on a right side thereof.

Referring to FIG. 12, it was found that the polyethylene separator without using the gel polymer electrolyte according to the present invention exhibited significant shrinkage at a high temperature. Referring to FIG. 13, it may be confirmed that the polyethylene separator without using the gel polymer electrolyte according to the present invention exhibited a very low degree of shrinkage when stored at 140°C, and had high thermal stability at a high temperature.

### Experimental Example 7: Lithium Secondary Battery Short-Circuit Test

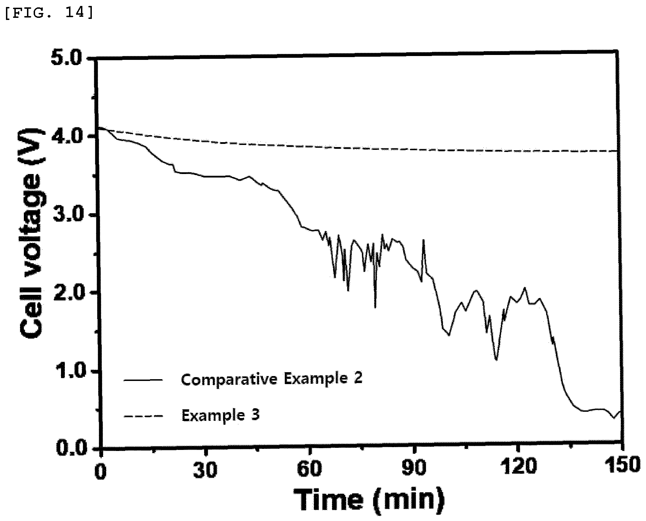

The lithium secondary batteries of Example 3 and Comparative Example 2 were charged at a constant current of 0.1 C to 4.2 V at 25°C and stored in a hot box at 140°C to measure a battery voltage over time. The results thereof are illustrated in FIG. 14.

Referring to FIG. 14, the lithium secondary battery of Example 3 using the gel polymer electrolyte of Example 2 maintained the battery voltage stably even at a high temperature in comparison to the lithium secondary battery of Comparative Example 2 using the liquid electrolyte of Comparative Example 1. According to these results, it may be understood that, in a case in which the gel polymer electrolyte according to the present invention was used, thermal stability of the lithium secondary battery may be significantly improved by suppressing a micro internal short-circuit phenomenon of the lithium secondary battery.

### Experimental Example 8: Electrode Calorific Value Measurement

In the lithium secondary batteries of Example 3 and Comparative Example 2, calorific values of the negative electrode and the positive electrode were measured using differential scanning calorimetry (DSC) in order to compare calorific values of the electrodes according to the electrolyte.

Specifically, charging of the above-prepared lithium secondary batteries of Example 3 and Comparative Example 2 at a constant current of 0.1 C to 4.2 V at 25°C and discharging of the lithium secondary batteries at a constant current of 0.1 C to 2.5 V were set as one cycle, and a 4-cycle formation process was performed. Thereafter, after each lithium secondary battery was charged at a constant current of 0.2 C to 4.2 V at 25°C and discharged at a constant current of 0.2 C to 2.5 V to perform one cycle of the charging and discharging and was again fully-charged at a constant current of 0.2 C, each lithium secondary battery was disassembled to recover positive electrode and negative electrode materials, and calorific values were then measured by a DSC test. The DSC test was performed by heating from 0°C to 300°C at a rate of 10°C/min.

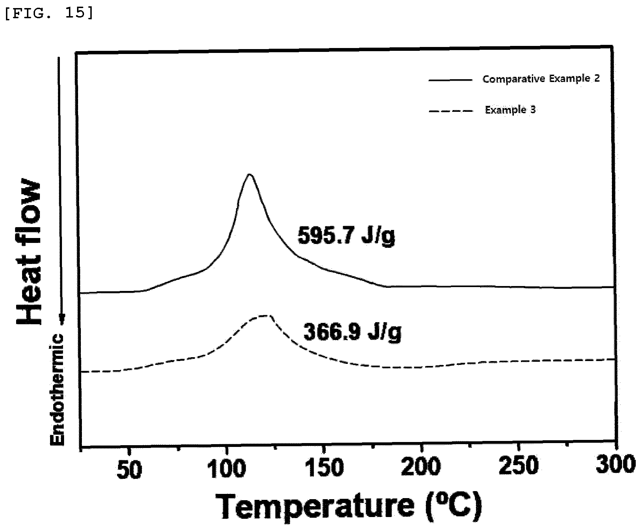

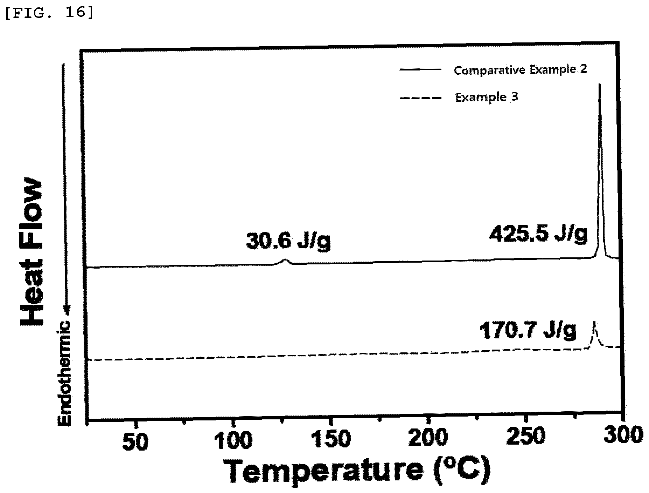

Results of the DSC test for the negative electrode are illustrated in FIG. 15, and results of the DSC test for the positive electrode are illustrated in FIG. 16.

Referring to FIGS. 15 and 16, it may be understood that calorific values of both the negative electrode and the positive electrode of the lithium secondary battery of Example 3 were significantly reduced in comparison to those of Comparative Example 2. According to these results, it may be understood that the composition for forming a gel polymer electrolyte or the gel polymer electrolyte of the present invention may significantly improve the thermal safety of the lithium secondary battery.

## Claims

1. A composition for forming a gel polymer electrolyte, the composition comprising:
a lithium salt;
an organic solvent; and
a crosslinking compound represented by Formula 1: 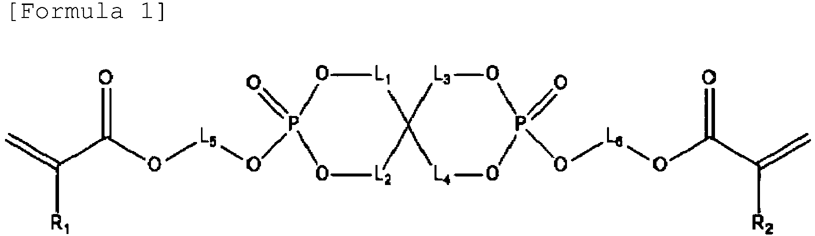
wherein, in Formula 1, L₁, L₂, L₃, and L₄ are each independently selected from a direct bond or an alkylene group having 1 to 3 carbon atoms,
L₅ and L₆ are each independently an alkylene group having 1 to 20 carbon atoms in which at least one methylene group isoptionally substituted with an ether group and at least one hydrogen is substituted with fluorine, and
R₁ and R₂ are each independently selected from hydrogen, an alkyl group having 1 to 3 carbon atoms, or a halogen.

2. The composition for forming a gel polymer electrolyte of claim 1, further comprising a polymerization initiator.

3. The composition for forming a gel polymer electrolyte of claim 1, wherein a molecular weight of the crosslinking compound is in a range of 700 g/mol to 2,000 g/mol.

4. The composition for forming a gel polymer electrolyte of claim 1, wherein the crosslinking compound is included in an amount of 1 wt% to 30 wt% based on a total weight of the composition for forming a gel polymer electrolyte.

5. The composition for forming a gel polymer electrolyte of claim 1, wherein, in Formula 1, L₁, L₂, L₃, and L₄ are each independently selected from a direct bond or a methylene group.

6. The composition for forming a gel polymer electrolyte of claim 1, wherein, in Formula 1, L₁, L₂, L₃, and L₄ each are a methylene group.

7. The composition for forming a gel polymer electrolyte of claim 1, wherein L₅ and L₆ are each independently represented by Formula 2:
[Formula 2] *-[(CH₂)ₙ-(CF₂)ₘ-(CH₂)ₚ-(O)_{q}-(CH₂)ᵣ-(CF₂)ₛ-(CH₂)ₜ]ᵤ-*
wherein, in Formula 2,
n, m, p, r, s, and t each are an integer of 0 or more,
q is 0 or 1,
m+s is an integer of 1 or more,
u is an integer of 1 or more, and
a product of (n+m+p+q+s+t) and u is an integer of 1 to 20,
provided when q is 1, n+m+p is an integer of 1 or more and r+s+t is an integer of 1 or more.

8. The composition for forming a gel polymer electrolyte of claim 1, wherein the crosslinking compound represented by Formula 1 comprises a crosslinking compound represented by Formula 1-1:

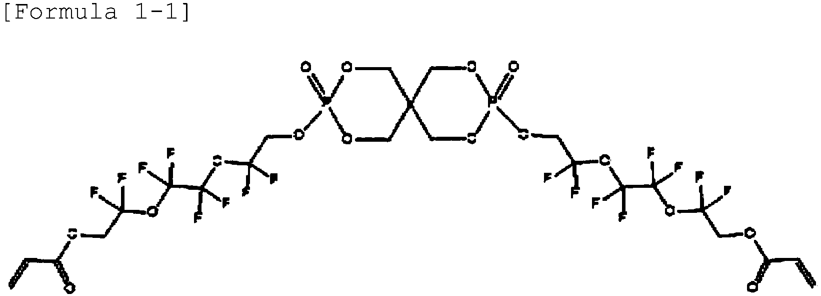

9. The composition for forming a gel polymer electrolyte of claim 1, wherein the lithium salt comprises at least one selected from the group consisting of LiCl, LiBr, LiI, LiBF₄, LiClO₄, LiAlO₄, LiAlCl₄, LiPF₆, LiSbF₆, LiAsF₆, LiB₁₀Cl₁₀, LiBOB (LiB(C₂O₄)₂), LiCF₃SO₃, LiFSI (LiN (SO₂F)₂), LiCH₃SO₃, LiCF₃CO₂, LiCH₃CO₂, and LiBETI (LiN(SO_{2C}F₂CF₃)₂).

10. The composition for forming a gel polymer electrolyte of claim 1, wherein the organic solvent comprises at least one selected from the group consisting of a carbonate-based solvent, an ester-based solvent, an ether-based solvent, a ketone-based solvent, an aromatic hydrocarbon-based solvent, a phosphate-based solvent, a sulfone-based solvent, a nitrile-based solvent, and an ionic liquid.

11. The composition for forming a gel polymer electrolyte of claim 1, further comprising an additive,
wherein the additive comprises at least one selected from the group consisting of a sultone-based compound, a halogen-substituted carbonate-based compound, a nitrile-based compound, a cyclic carbonate-based compound, a sulfite-based compound, a sulfone-based compound, a sulfate-based compound, a phosphate-based or phosphite-based compound, a borate-based compound, and a lithium salt-based compound.

12. The composition for forming a gel polymer electrolyte of claim 11, wherein the additive comprises the halogen-substituted carbonate-based compound,
wherein the halogen-substituted carbonate-based compound is fluoroethylene carbonate.

13. A gel polymer electrolyte comprising a lithium salt; an organic solvent; and a polymer matrix formed by a crosslinking reaction of a crosslinking compound represented by Formula 1: 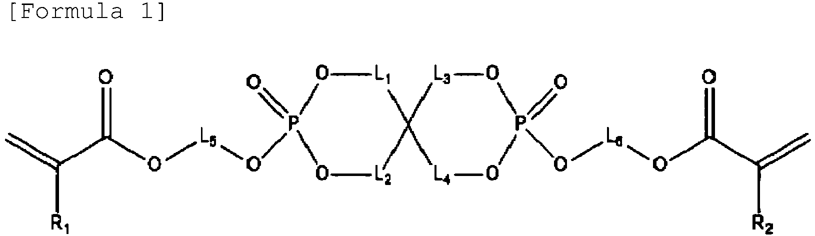
wherein, in Formula 1, L₁, L₂, L₃, and L₄ are each independently selected from a direct bond or an alkylene group having 1 to 3 carbon atoms,
L₅ and L₆ are each independently an alkylene group having 1 to 10 carbon atoms in which at least one methylene group is optionally substituted with an ether group and at least one hydrogen is substituted with fluorine, and
R₁ and R₂ are each independently selected from hydrogen, an alkyl group having 1 to 3 carbon atoms, or a halogen.

14. A lithium secondary battery comprising:
a positive electrode;
a negative electrode facing the positive electrode;
a separator disposed between the positive electrode and the negative electrode; and
the gel polymer electrolyte of claim 13.
